# EUROPEAN PATENT APPLICATION

(11) **EP 0 618 068 A1**
(43) Date of publication of application: **05.10.1994**
(21) Application number: 94302182.4
(22) Date of filing: 25.03.1994
(51) Int. Cl.: B32B 17/10

(54) **Aircraft glazings**

(30) Priority: 27.03.1993 GB 9306445
(71) Applicant: PILKINGTON AEROSPACE LIMITED, Kings Norton, Birmingham B38 8SR (GB)
(72) Inventor: Bruce, Robert Stuart, Halesowen, West Midlands B62 8EX (GB); Boguslavski, Igor A,, Moscow 11792 (SU); Solinov, Vladimir F., Moscow 117218 (SU)
(74) Representative: Halliwell, Anthony Charles

(57) **Abstract**

A laminated aircraft glazing having a high impact resistance for its weight comprises at least one structural glass ply (2,3) having at least one major face which has been subjected to an etching treatment and is protected within the laminate. Preferably the whole surface of the glass ply is etched and covered with a protective thermoplastic layer (2¹,3¹) after etching. The aircraft glazings preferably comprise two etched and protected structural glass plies, and may include an outer glass face ply (4) and/or an inner ply (5) of polymeric material.

## Description

The invention relates to aircraft glazings and, in particular, to laminated aircraft glazings comprising at least one structural glass ply which has been treated to increase its strength whereby it may be used to produce a glazing having a high impact resistance for its weight. Such glazings, i.e. glazings having a high impact resistance for their weight, are hereinafter referred to as "lightweight".

Lightness is generally an important design criteria for aircraft glazing, as also is impact resistance and, in the case of pressurised aircraft, the ability to maintain a differential pressure between the pressurised interior of the aircraft and the exterior. Windshields for civil aircraft are also required to "fail safe" so that, even if one structural ply of the windshield should fail, the windscreen must remain safe under normal operating conditions and be capable of withstanding the pressure differentials to which the windshield may be subject under those conditions.

The choice of materials for the construction of aircraft glazings is, of necessity, a compromise, since none of the available materials have all the required properties. Glass, acrylic or polycarbonate is generally used for the structural plies to provide the required impact resistance. Polycarbonate has a higher strength to weight ratio than glass, but is less durable, being more susceptible to surface scratching and to long term degradation i.e. physical ageing. Acrylic is more durable than polycarbonate and has a strength to weight ratio of the same order as known high strength glass. However its higher coefficient of thermal expansion impairs the reliability of the product when it is used in combination with glass (commonly used as the outer ply to ensure good durability), and its high price also militates against its use. The strength to weight of glass plies has been increased by thermal and chemical tempering techniques which have improved over the years; as a result, glass plies are today generally preferred to polycarbonate or acrylic for the structural plies of aircraft windshields for pressurised aircraft, at least for non-military applications. However, it remains desirable to increase the strength to weight ratio of glass still further to enable aircraft windshields with glass structural plies with even lighter design weights to be produced.

It has previously been proposed, for example in Swiss patent specification 367 942 dated 1958 and US patent 3 711 263 dated 1969, to enhance the strength of glass by etching the surface to up to a depth of 80 or 20 microns respectively to remove surface defects and thereby strengthen the glass; the patent specifications suggest applying silica or other inorganic layer over the etched surface as a protective or hard layer. According to the Swiss patent specification, optimal strengthening may be achieved by thermal treatment of the glass directly after etching and before provision of a protective layer. According to the US patent, the glass treated is chemically toughened before etching.

GB patent specification 1 359 165 dated 1974 relates to laminated glass for use in buildings and vehicles; it teaches subjecting a face of a glass pane to a rectifying treatment which reduces the impairment of that face by faults liable to cause stress concentrations when tensioning forces are applied to the glass pane, and using that pane in a laminate with the face which has been subject to the rectifying treatment located internally of the laminate. The rectifying treatments described include fire polishing and chemical dissolution (etching) to remove, for example, a glass depth of 60 microns; the face of the glass which is subjected to the rectifying treatment may, before or after that treatment, be compressively stressed e.g. by chemical or thermal tempering (toughening), and advantageously the external layers of both sides of the pane may be subjected to the rectifying treatment and compressively stressed substantially symmetrically. The laminates of the invention are said to be particularly suitable for use as motor vehicle windscreens, and it is proposed to use such a laminate as a vehicle windscreen comprising two panes of glass, one pane having a face that has been subject to a rectifying treatment located internally of the laminate as the inner pane of the windscreen. This arrangement provides a combination of properties which are important for avoiding concussive injury to a person who may make impact with the vehicle windscreen; this was a particular concern at the date of the patent specification when seat belts were less regularly worn by motor vehicle passengers than they are today.

The fact that the strength of glass may be enhanced by etching or other surface treatment to remove surface faults has thus been documented for many years. Nevertheless, the only commercial use of such treatment to enhance glass strength of which the applicants are aware has been to increase the strength of very thin glass (typically 0.05 to 0.5 mm thick) used for solar cell coverglasses. Apart from this, it appears to have remained a paper proposal, despite the long standing requirement for enhanced glass strength in a number of glazing applications, and especially in aircraft windscreens.

The present inventors have now realised that, provided it is properly utilised in the correct circumstances and conditions, such an etching treatment can enable significant advances to be made in the strength of aircraft glazings and, in particular can enable the production of glazings utilising structural glass plies which are significantly thinner and lighter than comparable glazings hitherto.

According to the present invention there is provided a laminated aircraft glazing having a high impact resistance for its weight comprising at least one structural glass ply having at least one major face which has been subjected to an etching treatment and is protected within the laminate.

The more of the faces of the structural glass plies that are etched and protected, the greater the strength of the laminated product and the thinner the glass that can be used to achieve a given performance.

In practice, the limiting impact the glazing will withstand without failure will depend on the tensile stress which the internal or rearward faces, i.e. the faces opposite the direction of the expected impact, are able to withstand. It is thus preferred that at least the rearward major face of each structural glass ply or plies has been subjected to an etching treatment and is protected within the laminate. Most preferably, both the major surfaces and all the edge surfaces of at least one, and preferably at least two, structural glass plies will be subjected to an etching treatment so that all the surface of the said ply or plies is etched. After etching, the etched surfaces are preferably protected with a thermoplastic layer prior to incorporation of the etched ply or plies within the laminate.

The structural glass plies treated will usually be of strengthened glass. When using thermally strengthened (i.e. toughened or tempered) glass, we prefer to etch away over 80 microns, generally over 90 microns and especially over 100 microns from each of the glass surfaces to be etched. Etching of the strengthened glass surfaces removes the highly stressed outer layer and it might have been expected that removal of such a thick layer would lead to a reduction, rather than an increase, in the glass strength and, in practice, we have found it desirable to avoid removing more than about 300 microns (preferably not more than about 200 microns) thickness from the major face of the thermally toughened glass surfaces (although more may be removed from and adjacent to the edges as hereafter described). The compressively stressed surface layers in thermally strengthened glass (unlike those of chemically strengthened glass) tend to be a constant percentage, typically 15-20%, of the total thickness of the glass, substantially irrespective of glass thickness in the normal range of thermally toughened glass thicknesses. Thus it will be appreciated that the invention is especially applicable when the structural glass plies are of thermally toughened glass having a nominal thickness of at least 3 mm, and preferably at least 5 mm, or thicker.

There is generally a higher concentration of deeper flaws at the cut edges of the glass and, even after the grinding and polishing of the edge faces normally carried out prior to thermal tempering, such flaws may be several hundred microns deeper. It is therefore preferred to preferentially etch the edges to a greater depth, for example a depth greater than 500 microns, than the major faces of the glass. This may conveniently be done in practice by carrying out an initial etching step with the major faces of the glass protected from attack, for example by an acid resistant protective film such as paraffin wax, or a preformed plastics film for example an adhesive polyethylene or polyvinylchloride film, and subsequently removing that protection and subjecting the whole surface of the glass to a further etching step.

The etching may be carried out using aqueous hydrofluoric acid preferably having a concentration in the range from about 3% by weight HF to about 20% by weight HF, for example a concentration in the range from about 5% by weight HF to about 6% by weight HF, since the more concentrated acid has a tendency to etch the glass unevenly resulting in a roughened surface, while the use of weaker acids extends the etch time necessary to remove the desired amount of glass. If desired, the etchant solution may be buffered, for example, a 5% by weight solution of aqueous HF may be buffered with 5% by weight of ammonium fluoride, NH₄F.

The temperature of the acid is not critical but it is preferred to operate at a temperature in the range 10°C to 30°C in order to achieve an acceptably flat surface at an acceptable etch rate, and it is generally convenient to operate at ambient temperature i.e. about 20°C. The acid should be agitated relative to the glass surface and, using the preferred 5 to 6% by weight aqueous HF at a temperature of 20°C, an etch rate of approximately 50 microns per hour may be achieved.

Each glass ply etched is preferably tempered to a modulus of rupture of at least 180 MPa and preferably at least 200 MPa prior to etching, and if it is to be used in a curved glazing product, should be curved to shape prior to etching. In practice, the glass will first be curved to shape and then, while still hot from the curving process, rapidly quenched in, for example powder or air.

The etching may be carried out partially mechanically, although it is preferred that at least the final stage (and generally all) of the etch is carried out chemically. The chemical etching may be carried out in generally known manner using a solution containing hydrofluoric acid and agitating the solution during etching.

The face or faces that have been subjected to an etching treatment should be protected before further handling or treatment which cause faults to develop in the etched glass surface. This is conveniently, although not necessarily, done immediately after etching. In a preferred aspect of the invention, the etched faces are protected with a layer of thermoplastic material, such as polyurethane or polyvinylbutyral, which may also serve to bond the glass face it protects to an adjacent layer of the laminate. In a particularly preferred aspect, the etched glass plies are encapsulated in a thermoplastic layer, which preferably covers the whole of the major and edge surfaces of the glass, after etching. The etched surfaces may be protected using a preformed layer of thermoplastic material, for example a layer of thermoplastic polyurethane or polyvinylbutyral, preferably having a thickness of at least 0.25 mm (and usually a thickness in the range 0.25 to 1.00 mm). Alternatively, the etched surfaces may be protected by treatment with a film-forming solution which, after evaporation of the solvent and heat treatment, produces a continuous polymer coating which may have a thickness of, for example, 0.5 to 50 microns. The coatings may be applied, for example, by immersion of the etched glass plies in the solution or by spraying, and, for relatively thick coatings applied from solution, multiple applications may be required with intermediate drying and evaporation stages. If desired, a further layer of preformed thermoplastic may be applied over a polymer coating applied from solution as described above.

Typical designs for aircraft windscreens comprises one, or more usually two, structural glass plies of strengthened glass with an outer glass face ply which is typically of relatively thin strengthened glass, and may have an electroconductive film for de-icing the windscreen on its inner surface. The glass plies may be laminated together with interlayers of energy absorbing material, typically thermoplastic polyurethane or polyvinylbutyral.

In practice, the etched surfaces of the glass plies may be protected, as indicated above, by encapsulation of the glass ply in a thermoplastic material, applied as a preformed sheet or in solution and preferably covering the whole of the surface, i.e. major and edge surfaces, of the glass, which thermoplastic material may also serve as all or part of an interlayer. However, such materials are generally insufficiently durable to serve as exposed surfaces of the glazing and it is preferred to use an inner liner of thermoset polyurethane, which may be either a separate ply, typically 0.5 to 3 mm thick, on the rear face of the glazing, or a thermoset polyurethane coating, typically 0.1 to 0.5 mm thick on a plastics sheet, for example a polycarbonate sheet, which would normally (for cost and weight considerations) have a thickness of less than 3 mm. More generally, the glazings according to the present invention may be provided with an inner ply of polymeric material (for example thermoset polyurethane, polycarbonate or acrylic) having a thickness in the range 0.5 to 6 mm, or even a thin inner ply of strengthened glass.

The use of the present invention enables aircraft windshields to be constructed with thinner glass plies than previously required. In a preferred aspect of the invention, there is provided a laminated bird resistant aircraft glazing having a thickness such that it is subject to a deflection greater than its thickness when subject to a certification requirement bird impact, said glazing comprising at least two glass plies, at least one of said glass plies being a high strength internal ply of strengthened and etched glass, with a protective layer adhering to the major surface and edge surfaces of said internal ply.

The expression "certification requirement bird impact" is used to refer to the maximum bird impact the glazing is required to withstand for certification by the relevant certification authorities (which, for aircraft registered in Europe, will usually be the Joint Aviation Authority). The expression internal ply is used to refer to a ply having both its major faces protected by other plies within the laminate.

Thus the invention enables aircraft windshields to be constructed with thinner glass plies than are required in corresponding designs (designs for the same aircraft) currently certified for use. For example, an aircraft glazing in accordance with the invention having two structural glass plies each having at least one major face which has been subjected to an etching treatment and protected within the laminate and an outer glass face ply may have an aggregate glass thickness which is at least 10%, and may be 14 to 30% or even more, less than the aggregate glass thickness in any corresponding design currently certified for that aircraft glazing.

In a preferred embodiment of the invention, a laminated aircraft windshield adapted for fitting by clamping comprises two structural glass plies each having at least one major face which has been subjected to an etching treatment protected within the laminate and an outer glass face ply, preferably of thin strengthened glass, has an aggregate glass thickness of less than 18 mm and, in consequence of the etching and protection of the said faces of the structural glass plies, is able to withstand the impact of a 41b bird at a speed of 360 knots (at a temperature in the range -40°C to +40°C at a bird impact angle of 45°). The aggregate thickness of the two structural glass plies may be less than 15 mm and will typically be in the range from about 10 to about 14 mm.

In a further preferred embodiment of the invention, a laminated aircraft windshield adapted for fitting by bolting comprises two structural glass plies each having at least one major face which has been subjected to an etching treatment protected within the laminate and an outer glass face ply, preferably of thin strengthened glass, has an aggregate glass thickness of less than 16 mm and, in consequence of the etching and protection of the said faces of the structural glass plies, is able to withstand the impact of a 4 lb bird at a speed of 360 knots (at a temperature in the range -40°C to +40°C) at a bird impact angle of 45°. The aggregate thickness of the two structural glass plies may be less than 13 mm and will typically be in the range from about 8 to about 12 mm.

The invention is illustrated, but not limited, by the following description with refrence to the accompanying drawings in which:

Figure 1 is a diagrammatic sectional view of the edge of an aircraft windshield in accordance with the invention adapted to be clamped into an airframe.

Figure 2 is a diagrammatic sectional view of the edge of an aircraft windshield in accordance with the invention adapted to be bolted into an airframe.

Figure 3 is a diagrammatic cross sectional view illustrating the technique used for encapsulating an etched structural glass ply in a thermoplastic sheet material prior to assembly into an aircraft windshield.

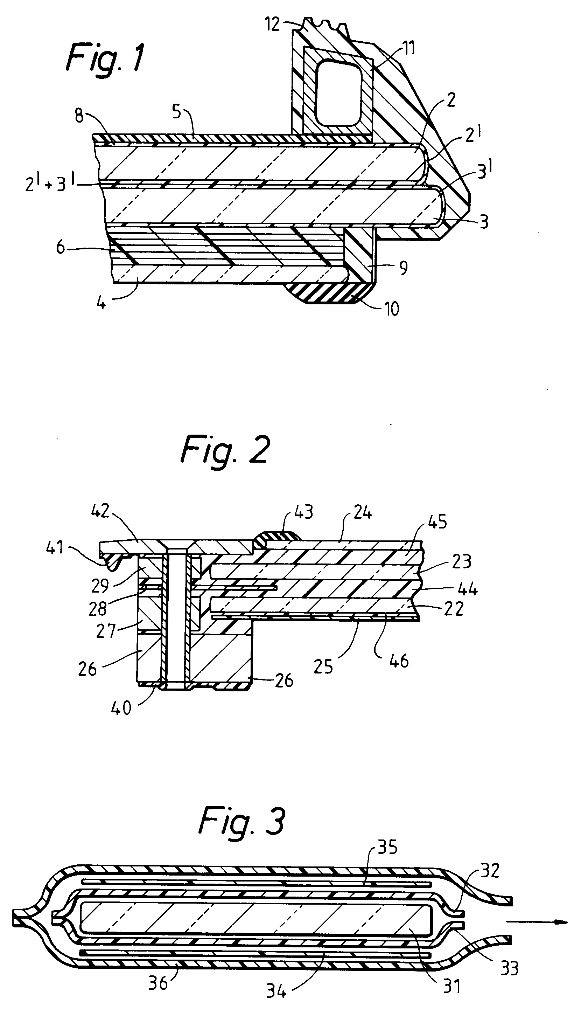

Referring to Figure 1, a laminated glass windshield for a civil airliner adapted to be clamped into the airframe comprises inner (rearward) and outer internal structural plies 2 and 3 of thermally strengthened glass, each about 5.8 mm thick, and a thermally toughened outer glass face ply 4 of thickness 3 mm. The structural glass plies have each been etched and encapsulated in layers (2',3') of thermoplastic polyurethane 0.76 mm thick as hereinafter described, and laminated together with a 1 mm thick thermoset polyurethane liner 5 on the inner (rearward) face of inner structural glass ply 2, with the outer glass 4 bonded to the outer face of structural glass ply 3 with a 7 mm thick polyurethane layer 6 (made up of 5 sheets 1.25 mm thick and one sheet 0.75 mm thick).

The windscreen is provided with a black polyurethane edge seal 9 covering the edges of the polyurethane layer 6 and the outer glass facing ply 4, and a polysulphide rubber weather seal 10 over the exterior face of the polyurethane edge seal and the adjacent margin of the outer face of glass ply 4. An aluminium alloy edge packer section 11 is secured to polyurethane liner 5 and a RHODORSEAL (trade mark) silicone edge moulding 12 cast around the edges of structural plies 2 and 3 providing a peripheral moulding which can be readily clamped in position in the air frame.

In a modified, more preferred version of the windscreen described above, the etched structural glass plies are each encapsulated in layers (2',3') of polyurethane 0.38 mm thick, and additional plies of thermoplastic polyurethane 0.76 mm thick (not shown) are provided between the two encapsulated structural glass plies 2,3 (so the opposed etched glass surfaces have a total thickness of 1.52 mm thermoplastic polyurethane between them), and between the inner (rearward) encapsulated structural glass ply 2 and the inner polyurethane liner 5.

To test the bird impact of this windscreen design a simulated version of the preferred modified windscreen was made up in the form of a square approximately 750 mm x 750 mm.

Two panes of clear float glass, 6 mm thick, were each cut to a size of 750 mm x 750 mm, the edges ground and polished prior to thermal tempering (toughening) in the normal manner, and the panes thermally tempered to a modulus of rupture of 230 MPa using a powder quenching process of the type described in UK patent specification 1 556 051.

Each thermally tempered glass pane was then etched, by immersion, with agitation, in a 5% by weight solution of aqueous hydrofluoric acid at 20°C for 150 minutes to remove a layer of glass 125 microns thick from each major face and each edge face of the glass pane. The etched panes were washed in tap water, and then in deionised water and allowed to dry in air. Each pane was then immediately encapsulated in a layer of thermoplastic polyurethane as illustrated, diagrammatically, in Figure 3 of the accompanying drawings. To avoid, so far as possible, any damage to the etched glass surfaces after etching and prior to encapsulating the etched glass, any necessary handling of the etched glass was carried out very carefully using rubber gloves.

Referring to Figure 3, each etched glass ply, designated 31 in Figure 3, was laid between two oversize layers 32,33 of a thermoplastic polyurethane PE 192 each 0.015" (0.375 mm) thick (PE 192 is a thermoplastic aliphatic polyurethane, based on a polyether, available in commerce from Morton Thiokol of USA). Thin embossed inert polyethylene films 34,35 were then placed over the polyurethane layers to facilitate air extraction and keep the surface of the polyurethane clean. The assembly of glass ply, polyurethane layers and inert films was placed in a plastics (polypropylene/polyester composite) vacuum bag 36 which was subjected to air extraction for a period of 30 minutes (i.e. at a rate of 1 hour/square metre of glass) to evacuate the bag and press the polyurethane against the glass ply under atmospheric pressure. After completing the air extraction, the plastics bag was sealed and the whole assembly heated in an oven for 3 hours at a temperature of 110°C i.e. 15°C above the softening point of the polyurethane. The polyurethane partially wet out onto the glass encapsulating the major faces and all edges and thereby protecting the whole surface of the glass from surface damage. The bag was allowed to cool, and the encapsulated ply removed.

After the two glass plies (initially 6 mm thick before etching) intended to serve as structural plies had been etched and encapsulated, the exposed polyurethane faces were sprayed with a 5% solution of A1100 adhesion promoter (an amino silane adhesion promoter available in commerce from Union Carbide of USA) in ethanol and allowed to dry in air for 30 minutes. The two glass structural plies were then assembled with a 0.76 mm thick layer of thermoplastic polyurethane PE 192 between them and the other components required to form the modified more preferred version of the laminate referred to above. That is, on the inner (rearward) face of the structural glass ply intended to be the inner (rearward) structural glass ply, there were assembled a further 0.76 mm thick layer of thermoplastic polyurethane, and a 1 mm thick thermoset polyurethane liner; on the outer (forward) face of the structural glass ply intended to serve as the outer (forward) structural glass ply, there were assembled sufficient thin layers (5 sheets 1.25 mm thick and one sheet 0.75 mm thick) of thermoplastic polyurethane PE 192 to form a polyurethane interlayer 7 mm thick and a thermally toughened outer glass ply 3 mm thick. The resultant laminate was then heated under pressure in an autoclave in known manner to bond the plies together.

On cooling and removal from the autoclave, a black polyurethane edge seal, a polysulphide rubber weather seal, and an aluminium alloy edge packer section were fitted to the laminate, together with a RHODORSEAL (trade mark) silicone edge moulding, all as generally described above with reference to Figure 1 to provide a simulated windscreen for bird impact testing.

Simulated windshields produced as described above passed bird impact tests using a 4 lb bird at 360 knots at a bird impact angle of 45° and at temperatures of -40°C, 20°C and 40°C, despite having an aggregate glass thickness of less than 15 mm, and consequent low weight. Moreover, the individual structural glass plies are each sufficiently strong for the windscreen to withstand loads resulting from aircraft pressurisation after fracture of the other structural glass ply so that the windscreen will fail safe.

The above results indicate that the windscreen construction meets the bird impact requirement for use in aircraft such as those of the AIRBUS (trade mark) A300 series.

The aggregate glass thickness of less than 15 mm compares with an aggregate glass thickness of about 19 or 20 mm (using chemically strengthened glass) or 25 mm (using thermally strengthened glass) in currently certified designs for aircraft of this series.

If the windscreen is bolted into position in the airframe, so there is no danger of it springing out of place, a structure using even thinner glass plies may be used to meet the same standards i.e. fail safe in use and survive a 4 lb bird impact. Such a structure is illustrated in Figure 2.

Referring to Figure 2, a laminated glass windshield for an aircraft intended for a civil airliner and adapted to be fitted in the airframe by bolting comprises inner (rearward) and outer structural plies 22 and 23 of thermally strengthened glass, each about 4.8 mm thick, and a thermally toughened outer glass face ply 24 of thickness 3 mm. The structural glass plies have each been etched and encapsulated in layers of thermoplastic polyurethane (not shown) as specifically described above in connection with the windshield design for the windshield for fitting by clamping, and laminated together with the outer glass ply 24 and an inner thermoset polyurethane 25 liner 1 mm thick. The plies are laminated together and with scalloped epoxide edge fittings 26, 27,28,29, silicone seals 40,41, capping ring 42 and polysulphide rubber weather seal 43 using sufficient thin layers of thermoplastic polyurethane to provide (in conjunction with the thermoplastic polyurethane layers encapsulating the structural glass plies) a polyurethane interlayer 44 of thickness 6.5 mm between the structural glass plies 22,23, a polyurethane interlayer 45 of thickness 5.2 mm between outer structural glass ply 23 and outer glass face ply 24, and a polyurethane interlayer 46 of thickness 1.3 mm between inner structural glass ply 22 and thermoset polyurethane liner 25.

The structure described above is generally suitable for an aircraft windshield required to withstand a 41b bird impact at an angle of 45° at 360 knots at temperatures in the range from -40°C to +40°C, and its aggregate glass thickness of below 13 mm compares favourably with the significantly greater aggregate glass thickness of bolt in glass windshields currently certified as meeting the above or similar requirements.

## Claims

1. A laminated aircraft glazing having a high impact resistance for its weight comprising at least one structural glass ply having at least one major face which has been subjected to an etching treatment and is protected within the laminate.

2. A laminated bird-resistant aircraft glazing, being a glazing as claimed in claim 1, said glazing comprising at least two glass plies, at least one of said glass plies being a high strength internal ply of strengthened and etched glass, with a protective layer adhering to the major surfaces and edge surfaces of said internal ply.

3. An aircraft glazing as claimed in claim 2 which glazing has a thickness such that it is subject to a deflection greater than its thickness when subject to a certification requirement bird impact.

4. An aircraft glazing as claimed in claim 2 or claim 3 comprising at least three glass plies.

5. An aircraft glazing as claimed in any of claims 2 to 4 wherein the strength of the edge of said high strength internal ply is at least 60% of the strength of the major surfaces thereof.

6. An aircraft glazing as claimed in claims 2 to 5 having an inner ply having a thickness in the range 0.5 to 6 mm.

7. An aircraft glazing as claimed in claims 2 to 6 comprising two internal high strength plies of strengthened and etched glass, each having a protective layer adhering to the major surfaces and edge surfaces thereof.

8. An aircraft glazing as claimed in claim 7 wherein said two internal high strength plies have an aggregate thickness not exceeding 15 mm.

9. An aircraft glazing as claimed in claim 8 wherein the strength of the edge of each of two said internal high strength plies is at least 60% of the strength of the major surfaces thereof.

10. An aircraft glazing as claimed in any of claims 2 to 9 having an outer glass face ply of thickness in the range 2 to 5 mm.

11. An aircraft glazing as claimed in any of claims 2 to 10 wherein the major surfaces and edge surfaces of said high strength internal ply have been etched, and the etched surfaces thereafter protected with a thermoplastic layer which forms a continuous envelope adhering to and protecting the major and edge surfaces of the glass ply.

12. An aircraft glazing as claimed in claim 11 wherein the thermoplastic layer is of polyurethane.

13. An aircraft glazing as claimed in claim 1 wherein the major and edge surfaces of said structural glass ply have been protected, prior to lamination, by a protective layer adhered thereto.

14. An aircraft glazing as claimed in claim 1 having an outer glass face ply.

15. An aircraft glazing as claimed in claim 14 wherein the outer glass face ply is of thin strengthened glass.

16. An aircraft glazing as claimed in any of the preceding claims having an inner polyurethane liner.

17. An aircraft glazing as claimed in any of claims 14 to 16 comprising two structural glass plies.

18. An aircraft glazing as claimed in claim 17 wherein each of the said two structural glass plies has at least one major face which has been subjected to an etching treatment and is protected within the laminate.

19. An aircraft glazing as claimed in claim 17 having an outer glass face ply in which glazing the aggregate thickness of the structural glass plies and outer glass face ply is 10% or more less than the aggregate thickness of the glass plies used currently in any design certified for that aircraft glazing.

20. An aircraft windshield for fitting by clamping, being a glazing as claimed in claim 17 having an outer glass face ply in which glazing the aggregate thickness of the glass plies is less than 18 mm which glazing, in consequence of the etching and protection of the said faces of the structural glass plies, is able to withstand the impact of a 4 lb bird at a speed of 360 knots (at temperatures in the range -40°C to +40°C) at a bird impact angle of 45°.

21. An aircraft windshield as claimed in claim 20 in which the aggregate thickness of the said two structural glass plies is less than 15 mm.

22. An aircraft windshield as claimed in claim 21 in which the aggregate thickness of the said two structural glass plies is in the range from about 10 to about 14 mm.

23. An aircraft windshield for fitting by bolting, being a glazing as claimed in claim 17 having an outer glass face ply in which glazing the aggregate thickness of the glass plies is less than 16 mm which glazing, in consequence of the etching and protection of the said faces of the structural glass plies, is able to withstand the impact of a 4 lb bird at a speed of 360 knots (at a temperature in the range -40°C to +40°C) at a bird impact angle of 45°.

24. An aircraft windshield as claimed in claim 23 in which the aggregate thickness of the said two structural glass plies is less than 13 mm.

25. An aircraft windshield as claimed in claim 24 in which the aggregate thickness of the said two structural glass plies is in the range from about 8 to about 12 mm.

26. An aircraft glazing as claimed in any of the preceding claims in which each of said structural glass plies is of thermally strengthened glass.

27. An aircraft glazing as claimed in any of the preceding claims in which the major and edge surfaces of each of said structural glass plies has been etched and protected, prior to lamination, by a protective layer adhered thereto.

28. An aircraft glazing as claimed in any of claims 14 to 27 in which said outer glass face ply is about 3 mm thick.

29. An aircraft glazing as claimed in any of claims 14 to 28 wherein each said structural glass ply is etched and encapsulated in a thin thermoplastic after etching.

30. An aircraft glazing as claimed in claim 31 wherein the thermoplastic is polyurethane.

31. An aircraft glazing as claimed in claim 14 wherein an outer glass face ply is bonded to a structural glass ply by a thermoplastic layer.
